(19) 

**Europäisches Patentamt**
**European Patent Office**
**Office européen des brevets**

(11) **EP 4 692 719 A1**

(12) **EUROPEAN PATENT APPLICATION**
published in accordance with Art. 153(4) EPC

(43) Date of publication:
**11.02.2026 Bulletin 2026/07**

(21) Application number: **24779583.4**

(22) Date of filing: **15.03.2024**

(51) International Patent Classification (IPC):
**G01B 21/00** (2006.01)  **G01B 11/00** (2006.01)
**G01B 11/24** (2006.01)

(52) Cooperative Patent Classification (CPC):
**G01B 11/00; G01B 11/24; G01B 21/00**

(86) International application number:
**PCT/JP2024/010221**

(87) International publication number:
**WO 2024/203455 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023 JP 2023052408**

(71) Applicant: **Tokyo Seimitsu Co., Ltd.
Hachioji-shi, Tokyo 192-8515 (JP)**

(72) Inventor: **HAYASHI, Kyohei
Tsuchiura-city, Ibaraki 300-0006 (JP)**

(74) Representative: **Grünecker Patent- und
Rechtsanwälte
PartG mbB
Leopoldstraße 4
80802 München (DE)**

(54) **PROBE, AND SHAPE MEASURING DEVICE**

(57) A probe (26) includes: a light incidence/emission portion (cable tip surface (33a)) that emits measuring light (LA) and receive its reflected light (LB); an optical splitting element (beam splitter (44)) including a first surface (44a), a second surface (44b), and a third surface (44c), the optical splitting element (beam splitter (44)) optically splitting the measuring light (LA) incident on the first surface (44a) from the light incidence/emission portion so as to emit a portion thereof from the second surface (44b), optically splitting the reflected light (LB) incident on the second surface (44b) so as to emit a portion thereof from the first surface (44a) toward the light incidence/emission portion and to emit a remaining portion from the third surface (44c); a light-receiving element (45) that receives the reflected light (LB) emitted from the third surface (44c); and a tip portion mounting portion (mounting shaft (46)) that selectively mount either a first probe tip portion (50) for non-contact measurement or a second probe tip portion (60) for contact measurement.

FIG.5

EP 4 692 719 A1

**Description**

BACKGROUND OF THE INVENTION

Field of the Invention

The present invention relates to a probe used to detect position coordinates of a measurement point and a shape measuring device including the probe.

Description of the Related Art

As a shape measuring device for measuring the shape of an object to be measured (workpiece), a three-dimensional coordinate measuring machine is known, for example, which obtains the shape of the object to be measured by detecting the position coordinates (three-dimensional coordinates) of various measurement points of the object to be measured using a probe.

For example, the three-dimensional coordinate measuring machine described in Patent Literature 1 measures the shape of an object to be measured by: bringing a probing sphere of a probe for contact measurement into contact with each measurement point of the object to be measured; and acquiring position coordinates when the probing sphere is in contact with each measurement point.

A three-dimensional coordinate measuring machine described in Patent Literature 2 measures the shape of an object to be measured in a non-contact manner by: emitting measuring light to each measurement point on the object to be measured and receiving reflected light at each measurement point using an optical probe for non-contact measurement; and calculating a distance from the optical probe to each measurement point by a publicly-known measurement method using an interferometer.

Citation List

Patent Literatures

Patent Literature 1: Japanese Patent Application Laid-Open No. 2015-075431
Patent Literature 2: Japanese Patent Application Laid-Open No. 2020-098180

SUMMARY OF THE INVENTION

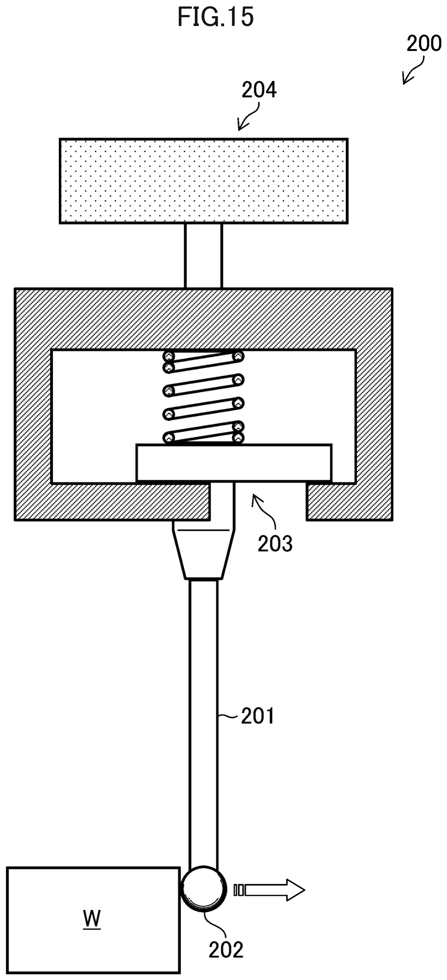

Figure 15 is an explanatory diagram for describing problems with a conventional probe for contact measurement. As shown in Figure 15, a probe 200 for contact measurement includes a stylus 201, a probing sphere 202 provided at a tip portion of the stylus 201, a fulcrum portion 203 provided at the base end portion of the stylus 201, and a sensor 204. The sensor 204 is a strain gauge or the like that detects a contact of the probing sphere 202 with each measurement point of a workpiece W that is an object to be measured.

In the probe 200, there is a distance between the probing sphere 202 (the point of force) and the fulcrum portion 203 and the sensor 204 (the point of application). Accordingly, when the probing sphere 202 is in contact with each measurement point of the workpiece W to detect the position coordinates of each measurement point as in the case of the three-dimensional coordinate measuring machine described in Patent Literature 1, errors may occur due to deflection of the stylus 201. In the case of detecting the three-dimensional coordinates of fine edge shapes and free curved surfaces, radius correction errors of the probing sphere 202 may occur. In addition, special ingenuity is required for the fulcrum portion 203, and this causes an increased cost.

Meanwhile, in a case where a non-contact optical probe is used, as in the three-dimensional coordinate measuring machine disclosed in Patent Document 2, problems such as those occurring when using the contact-type probe 200 do not arise. However, when the optical probe is used, the sensitivity of the optical probe becomes unstable with respect to an object to be measured having a low surface roughness (for example, a mirror surface), which makes it difficult to perform shape measurement of the object to be measured. This problem is especially noticeable in the case of measuring the shape of a free curved surface.

In view of such circumstances, the present invention has been made to provide a probe and a shape measuring device, capable of executing shape measurement with a high accuracy, regardless of the type of an object to be measured.

In order to achieve the object of the present invention, a probe includes: a light incidence/emission portion configured to emit measuring light and receive reflected light of the measuring light; an optical splitting element including a first surface, a second surface, and a third surface, the optical splitting element configured to: split the measuring light incident on the first surface from the light incidence/emission portion and emit a portion of the measuring light from the second surface; receive, on the second surface, the reflected light of the measuring light that has been emitted from the second surface; and split the reflected light received on the second surface, emit a portion of the reflected light from the first surface toward the light incidence/emission portion, and emit a remaining portion of the reflected light from the third surface; a light-receiving element configured to receive the reflected light emitted from the third surface; and a tip portion mounting portion having an optical path for the measuring light emitted from the second surface and the reflected light incident on the second surface, and configured to selectively mount a first probe tip portion for non-contact measurement and a second probe tip portion for contact measurement, wherein the first probe tip portion includes a hollow first shaft that includes a first tip portion and a first base end portion, and forms the optical path in a case where the first base end portion is removably mounted to the tip portion mounting portion, and an optical element provided in the first tip portion and configured to: emit the measuring light, which is incident from the second surface through an inside of the first shaft toward an object to be measured; and emit the reflected light, which is reflected by the object to be measured, toward the second surface, and the second probe tip portion includes a hollow second shaft that includes a second tip portion and a second base end portion, and forms the optical path in a case where the second base end portion is removably mounted to the tip portion mounting portion, a tip sphere provided in the second tip portion and configured to contact the object to be measured, and a retroreflective element configured to retroreflect the measuring light incident from the second surface through an inside of the second shaft and return the reflected light toward the second surface.

According to the probe, the first probe tip portion for non-contact measurement and the second probe tip portion for contact measurement can be selectively mounted to the tip portion mounting portion depending on the object to be measured.

In the probe according to another aspect of the present invention, the optical element is a reflective element configured to: reflect the measuring light incident from the second surface through the inside of the first shaft, toward the object to be measured; and reflect the reflected light from the object to be measured toward the second surface.

In the probe according to another aspect of the present invention, the retroreflective element is provided inside the second tip portion.

In the probe according to another aspect of the present invention, the tip sphere is a retroreflective sphere lens that functions as the retroreflective element. This makes it possible to reduce the number of component members of the second probe tip portion, thereby achieving cost reduction.

In the probe according to another aspect of the present invention, the retroreflective sphere lens has a refractive index of 2. This makes it possible to set a back focus length of the retroreflective sphere lens to 0.

In the probe according to another aspect of the present invention, the light-receiving element is a position detection sensor or a two-dimensional image sensor. This makes it possible to detect the incident position coordinates of the reflected light incident on the light-receiving surface of the light-receiving element.

The probe according to another aspect of the present invention includes a collimator lens provided between the light incidence/emission portion and the first surface.

The probe according to another aspect of the present invention includes a rotation mechanism that rotates the tip portion mounting portion and the first probe tip portion in a direction about an optical axis of the optical path, in a case where the first probe tip portion is mounted to the tip portion mounting portion. This allows the measuring light to perform rotational scanning of the measurement surface of the object to be measured.

A shape measuring device to achieve the object of the present invention is a shape measuring device that measures the shape of an object to be measured, including: the probe; a displacement mechanism configured to displace the probe; a light source of the measuring light that is optically connected to the light incidence/emission portion; and an interference signal detection unit that is optically connected to the light incidence/emission portion, and configured to detect an interference signal between the reflected light incident on the light incidence/emission portion and reference light that is a portion of the measuring light reflected on a reflection surface which is different from the object to be measured and the retroreflective element.

The shape measuring device according to another aspect of the present invention includes: an incident position coordinate acquisition unit configured to continuously acquire incident position coordinates of the reflected light incident on a light-receiving surface of the light-receiving element, in a case where the second probe tip portion is mounted to the tip portion mounting portion; a distance calculation unit configured to continuously calculate a distance from a predetermined reference position to the retroreflective element based on the interference signal detected by the interference signal detection unit; and a contact detection unit configured to detect contact of the tip sphere with the object to be measured, based on the incident position coordinates continuously acquired by the incident position coordinate acquisition unit and the distance continuously calculated by the distance calculation unit during driving of the displacement mechanism. This makes it possible to easily detect contact between the tip sphere and the object to be measured.

In the shape measuring device according to another aspect of the present invention, the displacement mechanism is configured to displace the probe in at least X, Y and Z directions in a machine coordinate system of the shape measuring device, the shape measuring device comprising: an XYZ coordinate acquisition unit configured to acquire the X, Y and Z coordinates of the probe in the machine coordinate system; and a tip sphere coordinate calculation unit configured to calculate the X, Y and Z coordinates of the tip sphere in the machine coordinate system, based on the X, Y and Z coordinates of the probe acquired by the XYZ coordinate acquisition unit, the incident position coordinates acquired by the incident position coordinate acquisition unit, and the distance calculated by the distance calculation unit, in a case where the contact detection unit detects the contact of the tip sphere with the object to be measured. This makes it possible to obtain the X, Y and Z coordinates of the tip sphere in the machine coordinate system.

In the shape measuring device according to another aspect of the present invention, the tip sphere coordinate calculation unit acquires in advance information indicating a relationship among the X, Y and Z directions in the machine coordinate system, a two-dimensional direction of the light-receiving surface, and an emission direction of the measuring light from the second surface, and calculates the X, Y and Z coordinates of the tip sphere based on the X, Y and Z coordinates of the probe, the incident position coordinates, the distance, and the acquired information. This makes it possible to obtain the X, Y and Z coordinates of the tip sphere in the machine coordinate system.

The present invention makes it possible to perform shape measurement of an object to be measured with high accuracy, regardless of the type of the object to be measured.

BRIEF DESCRIPTION OF THE DRAWINGS

Figure 1 is a schematic view of a three-dimensional coordinate measuring machine.
Figure 2 is an enlarged perspective view of a probe head and a probe.
Figure 3 is a sectional view of a probe mounted with a first probe tip portion for non-contact measurement.
Figure 4 is an explanatory view for describing the structure for mounting the first probe tip portion and the second probe tip portion to a mounting shaft.
Figure 5 is a sectional view of the probe mounted with the second probe tip portion for contact measurement.
Figure 6 is an enlarged sectional view of the second probe tip portion shown in Figure 5.
Figure 7 is an enlarged sectional view of a modification example of the second probe tip portion.
Figure 8 is an explanatory view for describing the relationship between a refractive index of a probing sphere and a back focus length.
Figure 9 is an explanatory view for describing detection of an interference signal by a photodetector when the first probe tip portion is mounted to the probe.
Figure 10 is an explanatory view for describing detection of an interference signal by the photodetector when the second probe tip portion is mounted to the probe.
Figure 11 is an explanatory view for describing the functions of a controller and a control device.
Figure 12 is an explanatory view for describing the function of a contact detection unit and relationship information acquired by an information acquisition unit.
Figure 13 is an explanatory view for describing an example of a generation method of the relationship information.
Figure 14 is a flowchart indicating a flow of shape measurement processing of a measurement surface of a workpiece by the three-dimensional coordinate measuring machine.
Figure 15 is an explanatory view for describing problems of a conventional probe for contact measurement.

BRIEF DESCRIPTION OF THE DRAWINGS

[Configuration of Three-dimensional Coordinate Measuring Machine]

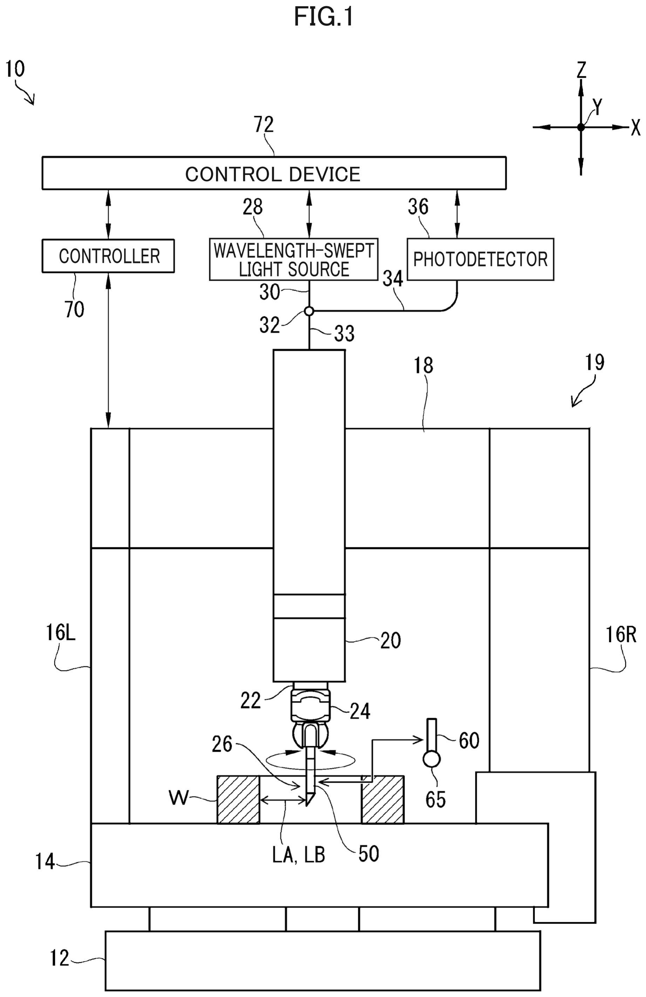

Figure 1 is a schematic view of a three-dimensional coordinate measuring machine 10 corresponding to the shape measuring device of the present invention. Here, XYZ axes orthogonal to each other in Figure 1 represent XYZ directions in a machine coordinate system that is determined based on a machine coordinate origin inherent to the three-dimensional coordinate measuring machine 10.

As shown in Figure 1, the three-dimensional coordinate measuring machine 10 executes shape measurement of a workpiece W, which is an object to be measured in the present invention, by using a probe 26 that supports both non-contact measurement and contact measurement. Note that the shape of the workpiece W herein includes a three-dimensional shape, a two-dimensional shape, a surface shape, and an outline shape, as well as various dimensional shapes, such as length and diameter, of the workpiece W. In addition, the shape and type of the workpiece W to be measured are not particularly limited.

The three-dimensional coordinate measuring machine 10 includes a stand 12, a table 14 (surface plate) mounted on the stand 12, a right Y-carriage 16R and a left Y-carriage 16L erected on both end portions of the table 14, and an X-guide 18 that couples the upper portions of the right Y-carriage 16R and the left Y-carriage 16L. The right Y-carriage 16R, the left Y-carriage 16L, and the X-guide 18 constitute a gate frame 19.

At both the end portions of the table 14 in the X direction, sliding surfaces are formed on the upper surface and side surfaces of the table 14 to allow the right Y-carriage 16R and the left Y-carriage 16L to slide along the Y direction. The right Y-carriage 16R and the left Y-carriage 16L have air bearings (illustration omitted) at positions facing the respective sliding surfaces of the table 14. This allows the right Y-carriage 16R and left Y-carriage 16L to move freely in the Y direction together with the X-guide 18.

The X-guide 18 is equipped with an X-carriage 20. The X-guide 18 has a sliding surface formed along the X direction, on which the X-carriage 20 slides. The X-carriage 20 is also equipped with air bearings (illustration omitted) provided at positions facing the sliding surface of the X-guide 18. This allows the X-carriage 20 to move freely in the X direction.

The X-carriage 20 is equipped with a Z-carriage 22 (also referred to as a Z-spindle). The X-carriage 20 is also equipped with a Z-direction guiding air bearings (not shown) to guide the Z-carriage 22 in the Z direction. Accordingly, the Z-carriage 22 is held by the X-carriage 20 so as to be movable in the Z direction. In a lower end portion of the Z-carriage 22, a probe head 24 is provided to selectively hold various types of probes including the probe 26 in the present invention.

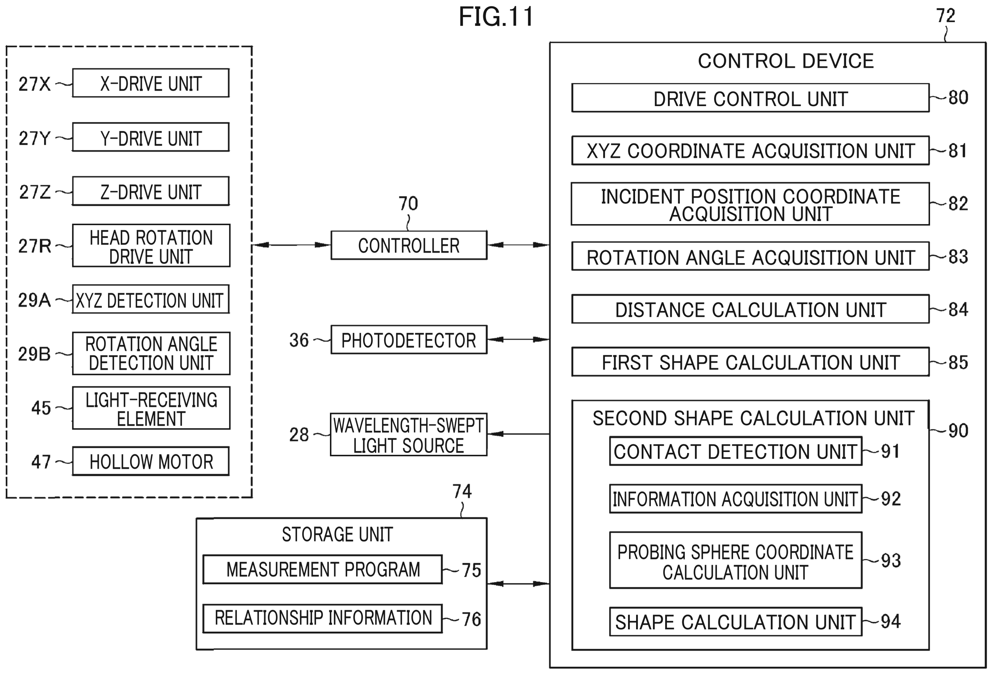

As shown in Figure 11 described later, the three-dimensional coordinate measuring machine 10 is equipped with a Y-drive unit 27Y that moves the gate frame 19 in the Y direction, an X-drive unit 27X that moves the X-carriage 20 in the X direction, and a Z-drive unit 27Z that moves the Z-carriage 22 in the Z direction. This allows the probe head 24 (probe 26) to be moved in the XYZ directions.

In addition, although illustration is omitted, a Y-linear scale is provided at the end portion of the table 14 on the side of the right Y-carriage 16R. The X-guide 18 is equipped with an X-linear scale, and the Z-carriage 22 is equipped with a Z-linear scale. In addition, the three-dimensional coordinate measuring machine 10 is also equipped with an XYZ detection unit 29A (see Figure 11), which is a detection unit that reads the respective XYZ linear scales. The detection result by the XYZ detection unit 29A is output to the control device 72 via the controller 70.

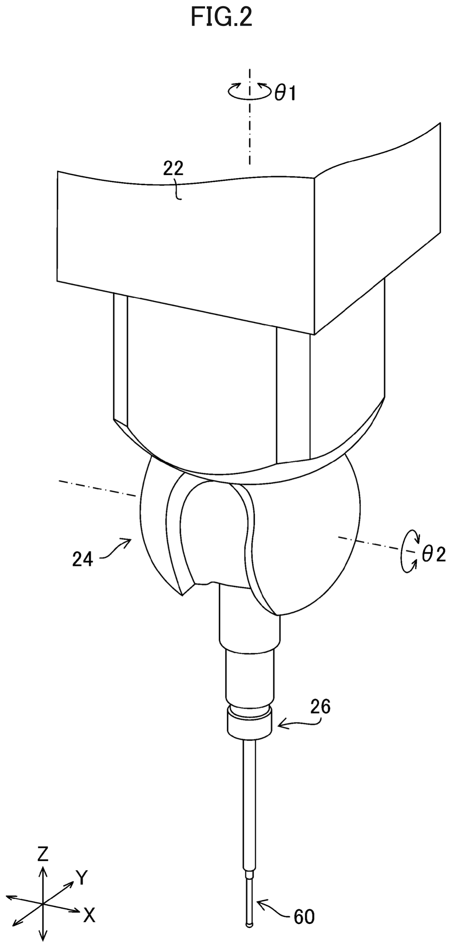

Figure 2 is an enlarged perspective view of a probe 26 mounted with a probe head 24 and a second probe tip portion 60. As shown in Figure 2, the probe head 24 is, for example, a 5-axis simultaneous control head including a stepless positioning mechanism. The probe head 24 is equipped with a head rotation drive unit 27R (see Figure 11), such as a motor, which rotates the probe 26 in a direction $\theta 1$ about (around) a rotation axis parallel to the Z direction, and in a direction $\theta 2$ about (around) a rotation axis perpendicular to the Z direction. The head rotation drive unit 27R constitutes the displacement mechanism in the present invention together with each of the drive units 27X, 27Y, and 27Z discussed above.

The probe head 24 is further equipped with a rotation angle detection unit 29B (see Figure 11), such as a rotary encoder, which detects respective rotation angles in the directions $\theta 1$ and $\theta 2$ about the axis of the probe 26. The detection result of the rotation angle detection unit 29B is output to the control device 72 through the controller 70.

The probe 26 is removably mounted to the probe head 24. As shown in Figure 1, either a first probe tip portion 50 for non-contact measurement or a second probe tip portion 60 for contact measurement may be selectively mounted on the tip portion of the probe 26. Because either the first probe tip portion 50 or the second probe tip portion 60 is mounted on the tip portion of the probe 26, non-contact measurement or contact measurement of the shape of the workpiece W can be selectively performed.

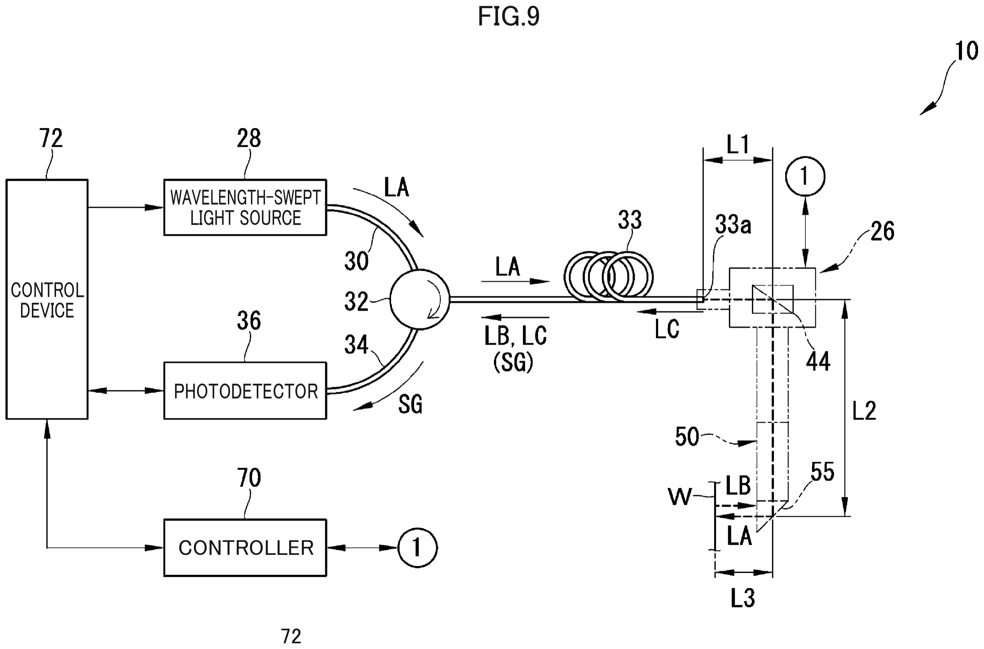

When the first probe tip portion 50 is mounted to the tip portion of the probe 26, measuring light LA is emitted toward the measurement surface of the workpiece W. The measuring light LA is input from a wavelength-swept light source 28 via an optical fiber cable 30, a fiber circulator 32, and an optical fiber cable 33. The probe 26 also receives reflected light LB reflected on the measurement surface of the workpiece W, and outputs the reflected light LB and reference light LC (see Figure 9) described later to a photodetector 36 via the optical fiber cable 33, the fiber circulator 32, and the optical fiber cable 34.

The second probe tip portion 60 is formed to be hollow, with a probing sphere 65 provided at its tip portion as described later in detail.

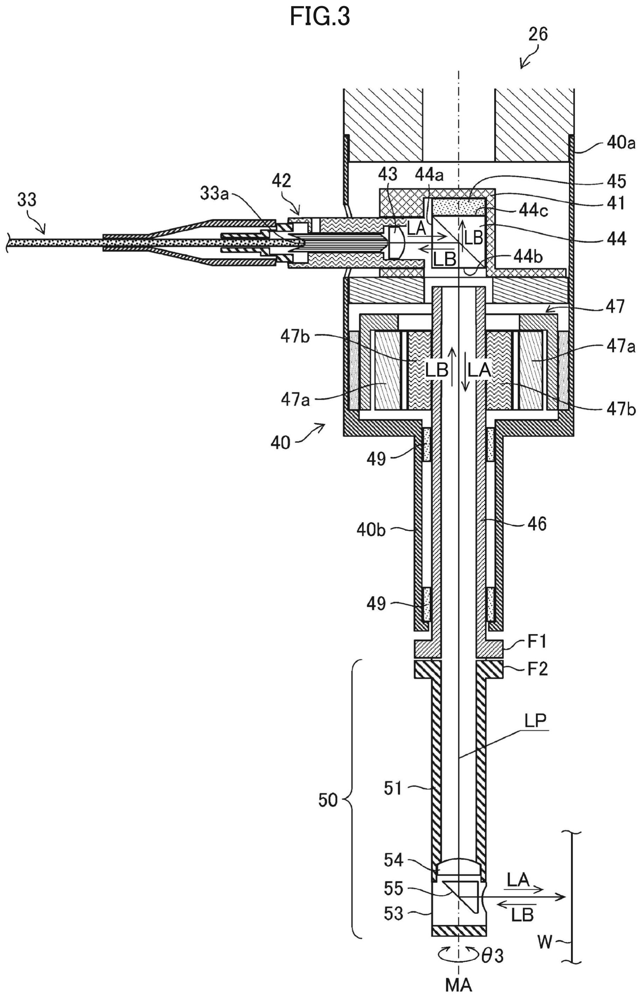

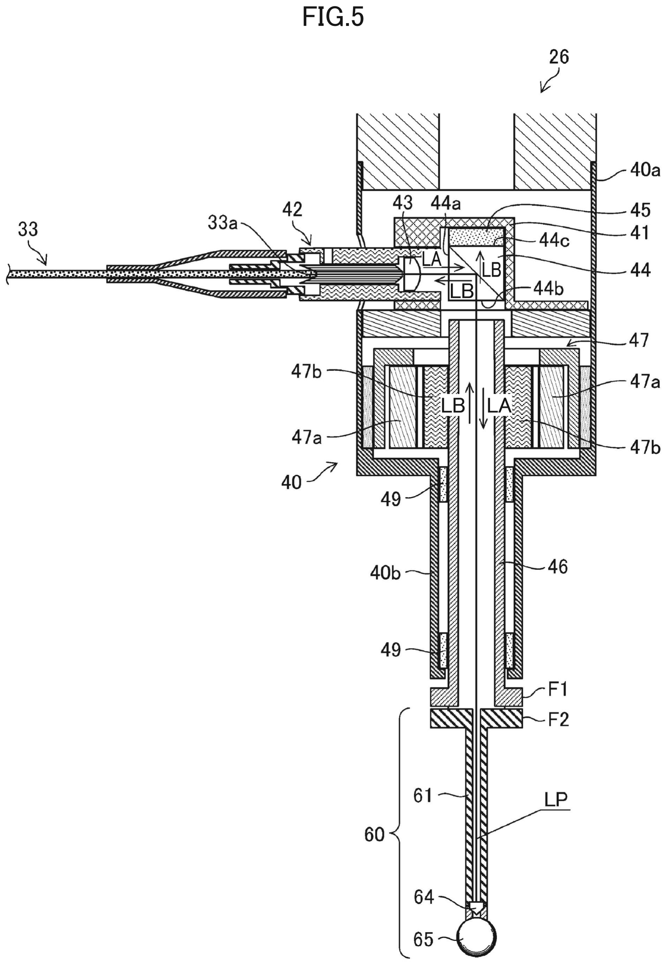

Figure 3 is a sectional view of the probe 26 mounted with the first probe tip portion 50 for non-contact measurement. As shown in Figure 3, the probe 26 has a longitudinal axis MA, and the first probe tip portion 50 can be rotated in a direction $\theta 3$ about the longitudinal axis MA (optical axis of an optical path LP described later). The probe 26 includes a probe body portion 40, an optical fiber connection portion 42, a mounting shaft 46, and a hollow motor 47, as well as the first probe tip portion 50 and the second probe tip portion 60 (see Figure 5), which can be selectively mounted on the mounting shaft 46.

The probe body portion 40 is formed in a substantially cylindrical shape extending in the direction of the longitudinal axis MA. The probe body portion 40 includes a body portion base end portion 40a and a body portion tip portion 40b that is smaller in diameter than the body portion base end portion 40a. The optical fiber connection portion 42 is provided so as to protrude from the side surface of the body portion base end portion 40a in a longitudinal axis perpendicular direction that is perpendicular to the longitudinal axis MA. In addition, a beam splitter holder 41, a beam splitter 44, a light-receiving element 45, the mounting shaft 46, and the hollow motor 47 are provided inside the body portion base end portion 40a.

The optical fiber connection portion 42 is connected to a tip portion of the optical fiber cable 33 on one end side and holds a collimator lens 43 on the other end side. Furthermore, the base end portion, which is opposite to the tip portion of the optical fiber cable 33, is inserted into the probe head 24, the Z-carriage 22 and so on, and then is connected to the fiber circulator 32.

A cable tip surface 33a, which is the tip surface of the tip portion of the optical fiber cable 33, corresponds to the light incidence/emission portion in the present invention. The cable tip surface 33a functions as an emission surface to emit the measuring light LA, which is input from the wavelength-swept light source 28 to the optical fiber cable 33 via the fiber circulator 32 and the like, in the longitudinal axis perpendicular direction. In addition, the cable tip surface 33a functions as an incident surface on which the reflected light LB of the measuring light LA is incident.

The collimator lens 43 collimates the measuring light LA (diffused light) output from the cable tip surface 33a into parallel light, and then emits it toward the beam splitter 44 described later. The collimator lens 43 also converges the reflected light LB, which is incident from the beam splitter 44, and then directs it onto the cable tip surface 33a.

The beam splitter holder 41 holds the beam splitter 44 at the position where the optical axis of the collimator lens 43 and an extension line of the longitudinal axis MA intersect. The beam splitter holder 41 also holds the light-receiving element 45 at the position facing a third surface 44c (will be described later) of the beam splitter 44.

The beam splitter 44, which corresponds to the optical splitting element in the present invention, optically splits the light (measuring light LA and reflected light LB) that is incident on the beam splitter 44, and then emits the split lights in different directions. The beam splitter 44 is formed in a substantially cubic shape having a first surface 44a, a second surface 44b and the third surface 44c, in which the second surface 44b and the third surface 44c are connected to the first surface 44a and are also perpendicular to the first surface 44a.

The first surface 44a is perpendicular to the optical axis of the collimator lens 43 and is a facing surface that faces the collimator lens 43. The second surface 44b is a surface that is perpendicular to the longitudinal axis MA and that faces the tip side of this longitudinal axis MA. The third surface 44c is a surface that is perpendicular to the longitudinal axis MA and that is on the opposite side of the second surface 44b.

The beam splitter 44 optically splits the measuring light LA, which is incident on the first surface 44a through the collimator lens 43 from the cable tip surface 33a, so as to emit a portion of the measuring light LA from the second surface 44b. The reflected light LB of the measuring light LA, which has been emitted from the second surface 44b along the longitudinal axis MA, is incident on the second surface 44b. Here, reference character LP in the drawing designates the optical path of the measuring light LA emitted from the second surface 44b and the reflected light LB incident on the second surface 44b.

The beam splitter 44 optically splits the reflected light LB incident on the second surface 44b, so as to emit a portion of the reflected light LB from the first surface 44a toward the collimator lens 43 (cable tip surface 33a), and emit a remaining portion of the reflected light LB from the third surface 44c toward the light-receiving element 45.

The light-receiving element 45 may be, for example, a position sensing sensor (PSD) or a two-dimensional image sensor. The light-receiving element 45 is held at the position facing the third surface 44c by the beam splitter holder 41. The light-receiving element 45 has a light-receiving surface that receives the reflected light LB emitted from the third surface 44c. The light-receiving element 45 then outputs incident position coordinates indicating the incident position of the reflected light LB incident on the light-receiving surface, to the control device 72 through the controller 70.

The mounting shaft 46 corresponds to the tip portion mounting portion in the present invention. The mounting shaft 46 is a cylinder that is inserted into the body portion tip portion 40b along the longitudinal axis MA from the inside of the body portion base end portion 40a, and protrudes from the tip side of the body portion tip portion 40b. The mounting shaft 46 has an internal surface surrounding the optical path LP. An opening portion on the base end side of the mounting shaft 46 faces the second surface 44b. On the other hand, a substantially annular tip flange F1 is formed at a circumferential edge portion of an opening portion on the tip side of the mounting shaft 46.

In addition, the mounting shaft 46 is held by the probe body portion 40 so as to be rotatable in the rotational direction θ3 about the axis. Specifically, the base end portion of the mounting shaft 46 is rotatably supported inside the body portion base end portion 40a by the hollow motor 47, described later, so as to be rotatable about the axis in the direction θ3. The tip portion of the mounting shaft 46 is also held by the body portion tip portion 40b so as to be rotatable in the direction θ3 about the axis via a bearing 49.

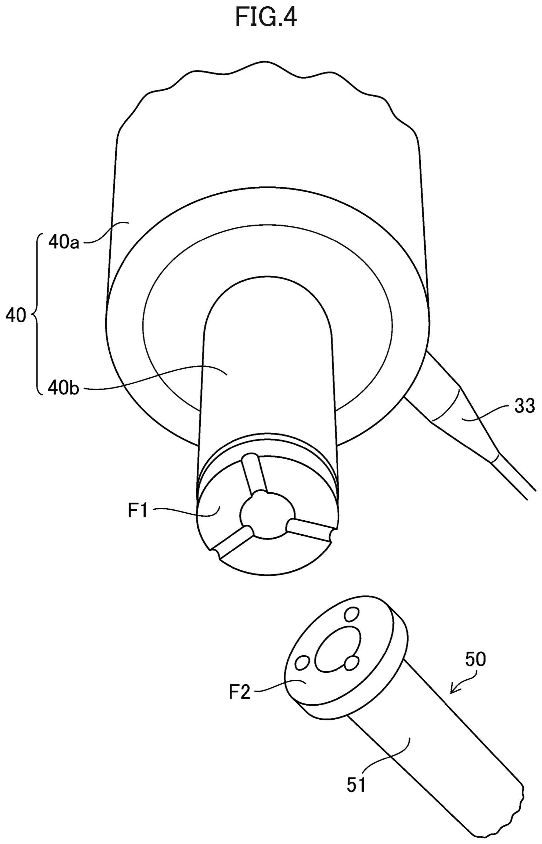

Figure 4 is an explanatory view describing the structure for mounting the first probe tip portion 50 and the second probe tip portion 60 to the mounting shaft 46. As shown in Figure 4, the tip flange F1 is selectively connected to a base end flange F2, which is formed on the base end side of each of the first probe tip portion 50 and the second probe tip portion 60 described later. For example, the base end flange F2 is removably mounted to the tip flange F1 by forming one of the tip flange F1 and the base end flange F2 with a magnet and forming the other with metal. Alternatively, the base end flange F2 may be connected to the tip flange F1 with a screw or the like. Moreover, on the surfaces of the tip flange F1 and the base end flange F2 that face each other, grooves, protrusions, or the like, may be formed for positioning. This makes it possible to selectively mount the first probe tip portion 50 and the second probe tip portion 60 to the mounting shaft 46.

Returning to Figure 3, the hollow motor 47, which corresponds to the rotation mechanism in the present invention, rotates the mounting shaft 46 in the direction θ3 about the axis. The hollow motor 47 includes a hollow stator 47a (also referred to as a stationary element) and a hollow rotor 47b (also referred to as a rotating element). The stator 47a is fixed to an inner wall surface of the body portion base end portion 40a. The rotor 47b is provided in an internal space of the stator 47a and is further externally fitted to an outer circumferential surface of the mounting shaft 46. The rotor 47b rotates in the direction θ3 about the axis, together with the mounting shaft 46. Here, since the detailed structure of the hollow motor 47 is a publicly-known technique, detailed description thereof is omitted.

The first probe tip portion 50 includes a hollow first shaft 51, an optical system holder 53, an imaging lens 54, and a right-angle prism mirror 55. The base end flange F2 discussed above, (corresponding to the first base end portion in the present invention) is formed at a circumferential edge portion of an opening portion on the base end side of the first shaft 51, and the optical system holder 53 (corresponding to the first tip portion in the present invention) is provided on the tip side of the first shaft 51. The first shaft 51 is a cylinder that forms the optical path LP (that surrounds the optical path LP) when the base end flange F2 is connected to the tip flange F1, that is, when the first probe tip portion 50 is mounted to the mounting shaft 46.

The optical system holder 53 holds in its inside the imaging lens 54 and the right-angle prism mirror 55. The imaging lens 54 is arranged at the position where the optical axis of the imaging lens 54 coincides with the optical axis (centerline) of the optical path LP. The imaging lens 54 forms an image of the measuring light LA, which is incident from the second surface 44b through the inside of the mounting shaft 46 and the first shaft 51, on the measurement surface of the workpiece w through the right-angle prism mirror 55. The imaging lens 54 emits the reflected light LB, which is incident from the workpiece W through the right-angle prism mirror 55, toward the second surface 44b.

The right-angle prism mirror 55, which corresponds to the optical element and the reflective element in the present invention, reflects the measuring light LA incident from the imaging lens 54 toward the measurement surface of the workpiece W. Specifically, the right-angle prism mirror 55 refracts the measuring light LA incident from the imaging lens 54 by 90° (including substantially 90°) and emits it toward the measurement surface of the workpiece W.

The right-angle prism mirror 55 also reflects the reflected light LB incident from the measurement surface of the workpiece W toward the imaging lens 54. As a result, the reflected light LB is made incident on the second surface 44b from the right-angle prism mirror 55 through the imaging lens 54, the inside of the first shaft 51, and the inside of the mounting shaft 46, and is further optically split by the beam splitter 44 and emitted from each of the first surface 44a and the third surface 44c. As a result, the reflected light LB is incident on each of the collimator lens 43 (cable tip surface 33a) and the light-receiving surface of the light-receiving element 45.

The right-angle prism mirror 55 is rotated in the direction θ3 about the axis together with the mounting shaft 46 and the first shaft 51 by the above-discussed hollow motor 47. This allows the measuring light LA to rotate and scan along the measurement surface of the workpiece W.

Here, various publicly-known reflective elements, such as mirrors, may be used in place of the right-angle prism mirror 55.

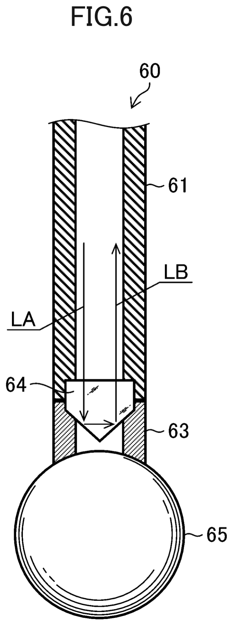

Figure 5 is a sectional view of the probe 26 mounted with the second probe tip portion 60 for contact measurement. Figure 6 is an enlarged sectional view of the second probe tip portion 60 shown in Figure 5. As shown in Figures 5 and 6, the second probe tip portion 60 includes a hollow second shaft 61, a probing sphere holder 63 (see Figure 6), a corner cube prism 64, and the probing sphere 65.

The base end flange F2 described above (corresponding to the second base end portion in the present invention) is formed at a circumferential edge portion of an opening portion on the base end side of the second shaft 61. The probing sphere holder 63 (corresponding to the second tip portion in the present invention) is provided on the tip side of the second shaft 61. The second shaft 61 is a cylinder that forms the optical path LP (that surrounds the optical path LP) when the base end flange F2 is connected to the tip flange F1, that is, when the second probe tip portion 60 is mounted to the mounting shaft 46.

The probing sphere holder 63 is formed in a substantially cylindrical shape, and holds the corner cube prism 64 in its inside. The probing sphere holder 63 also holds the probing sphere 65 at the tip portion of the probing sphere holder 63.

The corner cube prism 64 corresponds to the retroreflective element in the present invention. The corner cube prism 64 retroreflects the measuring light LA incident from the second surface 44b through the inside of the mounting shaft 46 and the second shaft 61, and then emits the reflected light LB of the measuring light LA toward the second surface 44b. Here, various retroreflective elements other than the corner cube prism 64 may be used as long as retroreflection of the measuring light LA is possible.

The probing sphere 65, which corresponds to the tip sphere in the present invention, is brought into contact with the measurement surface of the workpiece W at the time of contact measurement of the workpiece W.

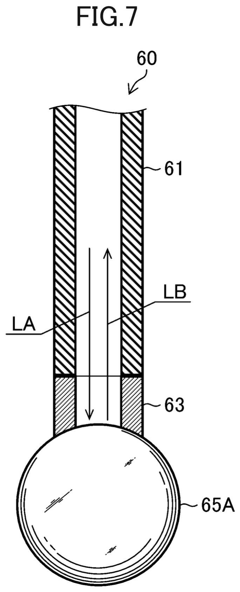

Figure 7 is an enlarged sectional view of a modification example of the second probe tip portion 60. In the example shown in Figures 5 and 6 discussed above, the corner cube prism 64 is used to retroreflect the measuring light LA, though other methods may be used to retroreflect the measuring light LA. For example, as shown in Figure 7, instead of the corner cube prism 64 and the probing sphere 65 provided in the probing sphere holder 63, a probing sphere 65A may be provided in the probing sphere holder 63.

The probing sphere 65A is a retroreflective spherical lens that is formed with, for example, a glass material (various optical materials other than glass material can also be used). The probing sphere 65A functions as a retroreflective element. The probing sphere 65A retroreflects the measuring light LA incident from the second surface 44b through the inside of the mounting shaft 46 and the first shaft 51, and then emits the reflected light LB of the measuring light LA toward the second surface 44b. As a result, since the number of component members of the second probe tip portion 60 can be reduced compared to the example shown in Figures 5 and 6, the cost of the second probe tip portion 60 can be lowered.

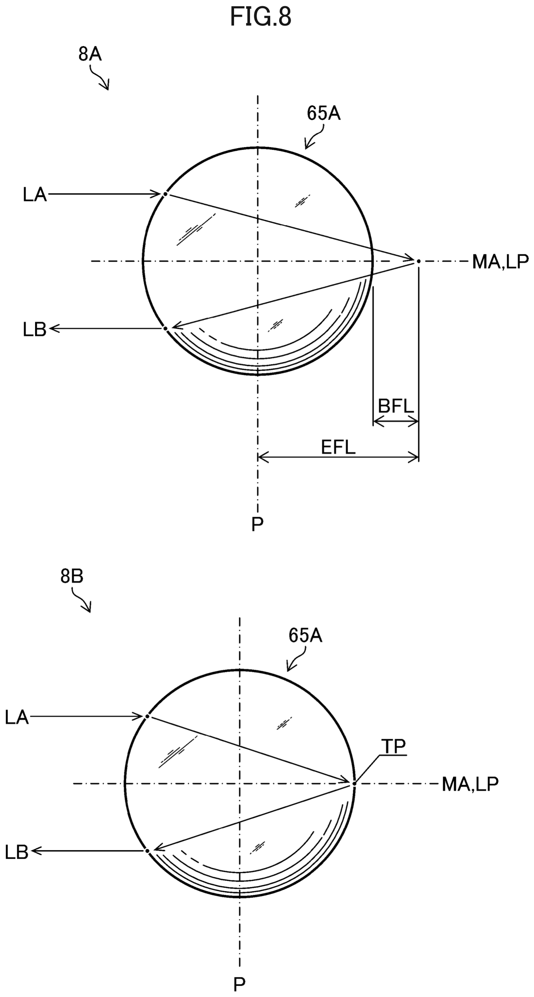

Figure 8 is an explanatory view describing the relationship between a refractive index and a back focus length BFL of the probing sphere 65A. Note that reference character P in the drawings designates a straight line passing through the center of the probing sphere 65A and perpendicular to the optical path LP (longitudinal axis MA).

As shown by reference numeral 8A in Figure 8, when the outer diameter (diameter) of the probing sphere 65A is "D" and the refractive index of a glass material that forms the probing sphere 65A is "n", a focal length EFL of the probing sphere 65A is expressed by [Formula 1] below, and the back focus length BFL of the probing sphere 65A is expressed by [Formula 2] below.

[Formula 1]

$$ EFL = \frac{nD}{4(n-1)} $$

[Formula 2]

$$ BFL = EFL - \frac{D}{2} $$

Here, when the refractive index n of the glass material that forms the probing sphere 65A is n = 2, the focal length EFL becomes EFL = D / 2 according to [Formula 1]. Then, when the focal length EFL is EFL = D / 2, the back focus length BFL becomes BFL = 0 according to [Formula 2] above.

Therefore, as shown by reference numeral 8B in Figure 8, the back focus length BFL can be set to "0" by setting the refractive index n of the probing sphere 65A to n = 2. Accordingly, the measuring light LA incident on the probing sphere 65A can be retroreflected at the apex TP, or in the vicinity thereof, on the tip side of the probing sphere 65A. As a result, it becomes easy to detect the position coordinates of the probing sphere 65A when the probing sphere 65A is brought into contact with the measurement surface of the workpiece W.

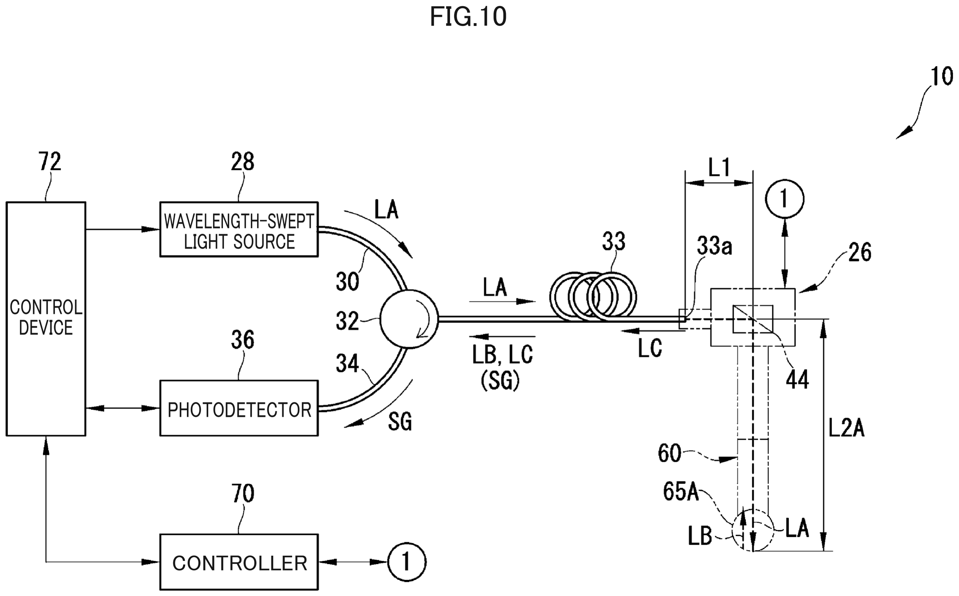

Figure 9 is an explanatory view describing detection of an interference signal SG by the photodetector 36 when the first probe tip portion 50 is mounted to the probe 26. Figure 10 is an explanatory view describing detection of the interference signal SG by the photodetector 36 when the second probe tip portion 60 is mounted to the probe 26. Here, in Figure 10, the probing sphere 65A is provided at the second probe tip portion 60 as shown in Figure 7 discussed above.

As shown in Figures 9 and 10, the wavelength-swept light source 28 corresponds to the light source in the present invention. The wavelength-swept light source 28 emits the measuring light LA to the fiber circulator 32 via the optical fiber cable 30 under the control of the control device 72. The measuring light LA is wavelength-swept light whose wavelength varies sinusoidally within a fixed wavelength band at a constant wavelength sweep period (or constant sweep frequency).

The fiber circulator 32 is optically connected to the wavelength-swept light source 28 via the optical fiber cable 30, optically connected to the photodetector 36 via the optical fiber cable 34, and optically connected to the probe 26 via the optical fiber cable 33.

The fiber circulator 32 is, for example, a non-reciprocating and unidirectional device having three ports to output the measuring light LA input from the wavelength-swept light source 28 via the optical fiber cable 30 to the optical fiber cable 33. The measuring light LA from the wavelength-swept light source 28 is input to the probe 26. As a result, when the first probe tip portion 50 is mounted to the probe 26, the reflected light LB reflected on the measurement surface of the workpiece W and the reference light LC reflected on the cable tip surface 33a (corresponding to the reflection surface in the present invention) are input to the fiber circulator 32 via the optical fiber cable 33 (see Figure 9).

Meanwhile, when the second probe tip portion 60 is mounted to the probe 26, the reflected light LB retroreflected on the probing sphere 65A (or the corner cube prism 64) and the reference light LC reflected on the cable tip surface 33a are input to the fiber circulator 32 via the optical fiber cable 33 (see Figure 10).

The fiber circulator 32 outputs the interference signal SG between the reflected light LB input from the probe 26 and the reference light LC to the photodetector 36 via the optical fiber cable 34.

The photodetector 36 corresponds to the interference signal detection unit of the present invention. Examples of photodetectors used include silicon photodiodes, InGaAs (indium gallium arsenide) photodiodes, phototubes, photomultiplier tubes, and the like. Under the control of the control device 72, the photodetector 36 converts the interference signal SG input from the fiber circulator 32 via the optical fiber cable 34 into an electrical signal, amplifies it, and outputs it to the control device 72. As a result, based on the detection result of the interference signal SG by the photodetector 36, the control device 72 calculates the distance from the cable tip surface 33a to the reflection surface of the reflected light LB.

Specifically, when the first probe tip portion 50 is mounted to the probe 26, the control device 72 calculates a total distance value of: a distance L1 from the cable tip surface 33a to the beam splitter 44; a distance L2 from the beam splitter 44 to the right-angle prism mirror 55; and a distance L3 from the right-angle prism mirror 55 to the measurement surface of the workpiece W (see Figure 9). Meanwhile, when the second probe tip portion 60 is mounted to the probe 26, the control device 72 calculates a total distance value of: the distance L1; and a distance L2A from the beam splitter 44 to the probing sphere 65A (or the corner cube prism 64) (see Figure 10). Here, since the specific calculation method of distance is a publicly-known technique (see, for example, Japanese Patent Application Laid-Open No. 2016-024086 and Japanese Patent Application Laid-Open No. 2018-084434), detailed description is omitted here.

Furthermore, in the present embodiment, the distance measurement is performed by the optical interference method using the wavelength-swept light source 28, though the distance measurement can be performed using other publicly-known optical interference methods.

Figure 11 is an explanatory view for describing the functions of the controller 70 and the control device 72. As shown in Figure 11, when the three-dimensional coordinate measuring machine 10 is in a manual measurement mode, the controller 70 drives the respective drive units 27X, 27Y, 27Z, and 27R in response to operation input from an operator, thereby displacing (moving) the probe 26 into a position and orientation (attitude) that enable non-contact or contact measurement of the position coordinates at each of multiple measurement points on the measurement surface of the workpiece W. When the three-dimensional coordinate measuring machine 10 is in an automatic measurement mode, the controller 70 drives the respective drive units 27X, 27Y, 27Z, and 27R under the control of the control device 72, thereby displacing probe 26 into the position and orientation that enable non-contact measurement or contact measurement of the position coordinates at each of multiple measurement points.

In addition, when the controller 70 performs rotational scanning of the measuring light LA on the measurement surface of the workpiece W during non-contact measurement at each measurement point, the controller 70 drives the hollow motor 47 to rotate the first probe tip portion 50 about the axis in the direction of θ3.

Furthermore, the controller 70 continuously outputs to the control device 72 the XYZ coordinates of the probe 26 detected by the XYZ detection unit 29A, the rotation angles of the probe 26 in the directions θ1 and 02 about the axes, which are detected by the rotation angle detection unit 29B, and outputs the incident position coordinates of the reflected light LB incident on the light-receiving surface, which are detected by the light-receiving element 45.

The control device 72 integrally controls the operation of each component member of the three-dimensional coordinate measuring machine 10. The control device 72 includes an arithmetic circuit constituted of various kinds of processors, memories, and the like. The various kinds of processors include a CPU (Central Processing Unit), a GPU (Graphics Processing Unit), an ASIC (Application Specific Integrated Circuit), and a programmable logic device (for example, a SPLD (Simple Programmable Logic Device), a CPLD (Complex Programmable Logic Device), and an FPGA (Field Programmable Gate Array)), or the like. Note that various kinds of functions of the control device 72 may be implemented by one processor or may be implemented by processors of the same type or different types.

The control device 72 is connected to a storage unit 74, as well as to the wavelength-swept light source 28, the photodetector 36, the controller 70, and the like discussed above. The storage unit 74 stores a measurement program 75, relationship information 76, and the like, as well as a control program of the three-dimensional coordinate measuring machine 10, which is not illustrated.

The measurement program 75 represents a measurement route of the probe 26 during shape measurement of the workpiece W (for example, the order of measuring each measurement point, the coordinates of each measurement point, and the coordinates of an intermediate point that is a moving route point of the probe 26 or the like). The relationship information is described later.

The control device 72 executes the unillustrated control program in the storage unit 74 to function as: a drive control unit 80, an XYZ coordinate acquisition unit 81, an incident position coordinate acquisition unit 82, a rotation angle acquisition unit 83, a distance calculation unit 84, a first shape calculation unit 85, and a second shape calculation unit 90.

The drive control unit 80 is activated when the automatic measuring mode (non-contact measurement and contact measurement) is selected. The drive control unit 80 drives each of the drive units 27X, 27Y, 27Z, and 27R via the controller 70 based on the measurement program 75 in the storage unit 74 to displace the position and attitude of the probe 26 for each measurement point on the measurement surface of the workpiece W. Accordingly, the probe 26 is displaced into the position and attitude that enable non-contact measurement or contact measurement of the position coordinates of the measurement point, for each of the measurement points.

The XYZ coordinate acquisition unit 81 continuously acquires the detection result of the XYZ coordinates of the probe 26 (probe head 24) from the XYZ detection unit 29A through the controller 70.

The incident position coordinate acquisition unit 82 continuously acquires the detection result of the incident position coordinates of the reflected light LB incident on the light-receiving surface of the light-receiving element 45 from the light-receiving element 45 via the controller 70.

The rotation angle acquisition unit 83 continuously acquires the detection result of the rotation angle of the probe 26 in the directions θ1 and θ2 about the axes from the rotation angle detection unit 29B through the controller 70.

The distance calculation unit 84 continuously executes acquisition of the detection result of the interference signal SG from the photodetector 36 and calculation of the distance from any reference position (cable tip surface 33a or second surface 44b) to the reflection surface of the reflected light LB based on the interference signal SG.

For example, when the reference position (described above) is the cable tip surface 33a, the distance calculation unit 84 continuously executes calculation of the total distance value (L1 + L2 + L3) shown in above-discussed Figure 9 at the time of non-contact measurement and continuously executes calculation of the total distance value (L1 + L2A) shown in above-discussed Figure 10 at the time of contact measurement. When the aforementioned reference position is the second surface 44b, the distance calculation unit 84 subtracts from the total distance value mentioned before a known distance from the cable tip surface 33a to the second surface 44b.

The first shape calculation unit 85 is activated when the non-contact measurement is selected in both the measurement modes including the automatic measurement mode and the manual measurement mode. At each time when the non-contact measurement of each measurement point is performed, the first shape calculation unit 85 calculates the position coordinates (XYZ coordinates) of the measurement point, based on at least the XYZ coordinates of the probe 26 acquired by the XYZ coordinate acquisition unit 81, the rotation angles in the directions θ1 and θ2 about the axes acquired by the rotation angle acquisition unit 83, and the distance calculated by the distance calculation unit 84. Therefore, the first shape calculation unit 85 calculates the shape of the measurement surface of the workpiece W based on the calculation result of the position coordinates of each measurement point. Here, since the method of calculating the shape of the measurement surface of the workpiece W by non-contact measurement is a publicly-known technique (see Patent Literature 2 described above), the detailed description is omitted here.

The second shape calculation unit 90 is activated when the contact measurement is selected in both the measurement modes. The second shape calculation unit 90 functions as: a contact detection unit 91; an information acquisition unit 92; a probing sphere coordinate calculation unit 93; and a shape calculation unit 94.

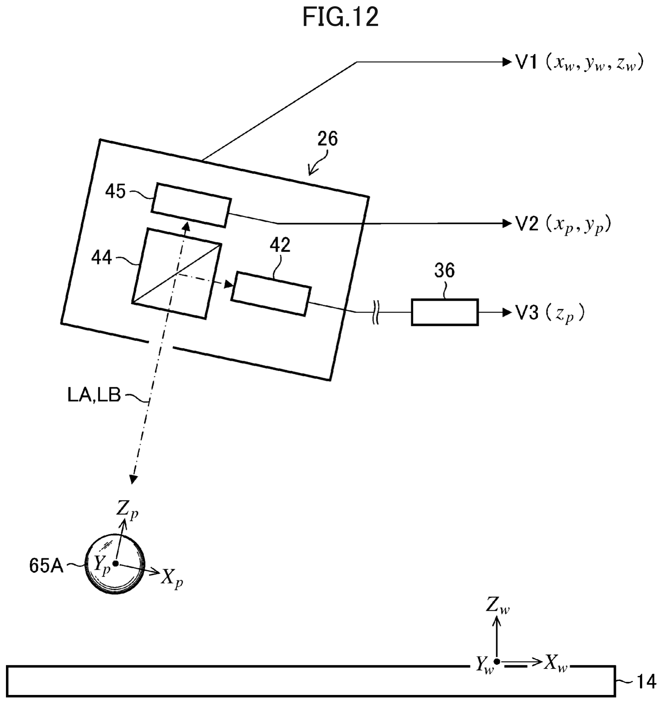

Figure 12 is an explanatory view describing the function of the contact detection unit 91 and the relationship information 76 acquired by the information acquisition unit 92. Here, $X_W Y_W Z_W$ axes in Figure 12, which correspond to the XYZ axes shown in Figure 1 or other drawings, indicate the machine coordinate system that is determined based on the machine coordinate origin inherent to the three-dimensional coordinate measuring machine 10. The $X_P Y_P Z_P$ axes in Figure 12 indicate a probe coordinate system based on the probe 26. The direction of the $X_P Y_P$ axes indicates a two-dimensional direction of the light-receiving surface of the light-receiving element 45, and the direction of $Z_P$ axis indicates the direction of the longitudinal axis MA (emission direction of the measuring light LA from the second surface 44b).

In addition, reference character V1 in Figure 12 designates the position coordinates $(x_w, y_w, z_w)$ of the probe 26 in the machine coordinate system acquired by the XYZ coordinate acquisition unit 81. Furthermore, reference character V2 in Figure 12 designates the incident position coordinates $(x_p, y_p)$ of the reflected light LB in the probe coordinate system (in the light-receiving surface of the light-receiving element 45) acquired by the incident position coordinate acquisition unit 82. Furthermore, reference character V3 in Figure 12 designates a distance calculation result V3 $(z_p)$ in the probe coordinate system calculated by the distance calculation unit 84.

As shown in Figure 12 and Figure 11 discussed above, the contact detection unit 91 is activated during driving of each of the drive units 27X, 27Y, 27Z, and 27R (during displacement of the position or attitude of the probe 26). The contact detection unit 91 detects whether or not the probing spheres 65 and 65A are in contact with each measurement point based on the incident position coordinate V2 $(x_p, y_p)$ continuously acquired by the incident position coordinate acquisition unit 82 and the distance calculation result V3 $(z_p)$ continuously calculated by the distance calculation unit 84.

For example, the contact detection unit 91 sets threshold ranges for the incident position coordinate V2 $(x_p, y_p)$ and the distance calculation result V3 $(z_p)$, and detects whether or not the probing spheres 65 and 65A are in contact with the measurement point based on whether or not the incident position coordinate V2 $(x_p, y_p)$ and the distance calculation result V3 $(z_p)$ fall outside the respective threshold ranges.

The contact detection unit 91 may set threshold ranges for the time derivative values of the incident position coordinate V2 $(x_p, y_p)$ and the distance calculation result V3 $(z_p)$, and may detect whether or not the probing spheres 65 and 65A are in contact with the measurement point based on whether or not the time derivative values of the incident position coordinate V2 $(x_p, y_p)$ and the distance calculation result V3 $(z_p)$ fall outside the threshold ranges.

In addition, when tracing measurement of the measurement surface of the workpiece W is performed with the second probe tip portion 60, a threshold value is set for each of the incident position coordinate V2 ($x_p$, $y_p$) and the distance calculation result V3 ($z_p$). Then, when the incident position coordinate V2 ($x_p$, $y_p$) and the distance calculation result V3 ($z_p$) are equal to or more than the respective thresholds, the contact detection unit 91 may perform time sampling of these values and detect the presence or absence of the contact of the probing sphere 65 and 65A with the measurement point based on the result of the time sampling.

The information acquisition unit 92 acquires the relationship information 76 from the storage unit 74 in advance. The relationship information 76 is the information indicating the relationship between the $X_W Y_W Z_W$ directions in the machine coordinate system of the three-dimensional coordinate measuring machine 10 and the $X_P Y_P Z_P$ directions in the probe coordinate system based on the probe 26. The relationship information 76 is, for example, a numerical expression (determinant). The relationship information 76 is generated and stored in the storage unit 74 (or may be stored in an external server) in advance.

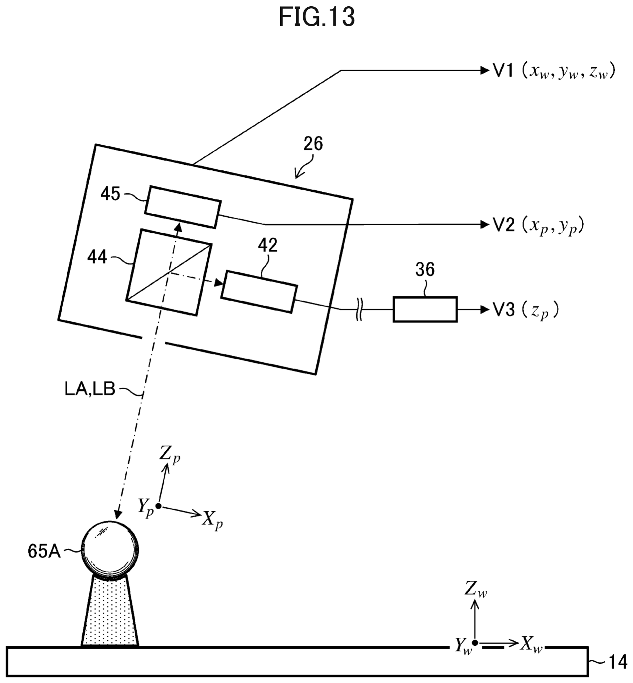

Figure 13 is an explanatory view for describing an example of a generation method of the relationship information 76. Here, in Figure 13, the probing sphere 65A is provided at the second probe tip portion 60 as shown in Figure 7 discussed above.

As shown in Figure 13, first, the probing sphere 65A or the corner cube prism 64 is removed from the probe 26. Then, the probing sphere 65A or the corner cube prism 64 removed from the probe 26, or an object identical to one of these, is set on the table 14.

Subsequently, while the second probe tip portion 60 is removed, the position and attitude of the probe 26 is displaced N times (where N is a natural number equal to or more than 4), non-contact measurement of the probing sphere 65A or the corner cube prism 64 (irradiation with the measuring light LA and reception of the reflected light LB) is performed by the probe 26 at each of the N positions. As a result, for each of the N positions, the position coordinate V1 ($x_w$, $y_w$, $z_w$) of the probe 26, the incident position coordinate V2 ($x_p$, $y_p$), and the distance calculation result V3 ($z_p$) are acquired (sampled).

When any one of N sets each comprising the position coordinate V1 ($x_w$, $y_w$, $z_w$), the incident position coordinate V2 ($x_p$, $y_p$), and the distance calculation result V3 ($z_p$), is defined as reference n = 0, following [Formula 3] holds for n = 1 to N.

[Formula 3]

$$\begin{bmatrix} x_{wn} \\ y_{wn} \\ z_{wn} \end{bmatrix} - \begin{bmatrix} x_{w0} \\ y_{w0} \\ z_{w0} \end{bmatrix} = \mathbf{R} \left\{ \begin{bmatrix} x_{pn} \\ y_{pn} \\ z_{pn} \end{bmatrix} - \begin{bmatrix} x_{p0} \\ y_{p0} \\ z_{p0} \end{bmatrix} \right\}$$

$$\mathbf{R} = \begin{bmatrix} r_{00} & r_{01} & r_{02} \\ r_{10} & r_{11} & r_{12} \\ r_{20} & r_{21} & r_{22} \end{bmatrix}$$

When [Formula 3] described above is solved in a least square sense using a sampling value of n = 1 to N, "R" in [Formula 3] is obtained as the relationship information 76 indicating the relationship between the $X_W Y_W Z_W$ directions in the machine coordinate system and the $X_P Y_P Z_P$ directions in the probe coordinate system.

Note that [Formula 3] described above can be substituted with following [Formula 4] for the purpose of reducing the effect of error of superposition on the reference n = 0, and [Formula 4] can be solved in a least square sense for all combinations of n = 0 to N, and m = 0 to N (provided that n ≠ m).

[Formula 4]

$$\begin{bmatrix} x_{w_n} \\ y_{w_n} \\ z_{w_n} \end{bmatrix} - \begin{bmatrix} x_{w_m} \\ y_{w_m} \\ z_{w_m} \end{bmatrix} = \mathbf{R} \left\{ \begin{bmatrix} x_{p_n} \\ y_{p_n} \\ z_{p_n} \end{bmatrix} - \begin{bmatrix} x_{p_m} \\ y_{p_m} \\ z_{p_m} \end{bmatrix} \right\}$$

$$n \neq m$$

Returning to Figure 11, the probing sphere coordinate calculation unit 93, which corresponds to the tip sphere coordinate calculation unit in the present invention, acquires the relationship information 76 from the information acquisition unit 92 in advance. Whenever the contact detection unit 91 detects the contact of the probing spheres 65 and 65A with the respective measurement points, the probing sphere coordinate calculation unit 93 also performs: acquisition of the position coordinate V1 ($x_w$, $y_w$, $z_w$) from the XYZ coordinate acquisition unit 81; acquisition of the incident position coordinate V2 ($x_p$, $y_p$) from the incident position coordinate acquisition unit 82; and acquisition of the distance calculation result V3 ($z_p$) from the distance calculation unit 84.

Then, based on the position coordinate V1 ($x_w$, $y_w$, $z_w$), the incident position coordinate V2($x_p$, $y_p$), the distance calculation result V3 ($z_p$), and the relationship information 76 (R), the probing sphere coordinate calculation unit 93 calculates the position coordinates (x, y, z) of the probing spheres 65 and 65A in the machine coordinate system using [Formula 5] below. Note that $[x_0, y_0, z_0]^T$ in [Formula 5] are offset coordinates from the origin of the machine coordinate system to the probing spheres 65 and 65A during non-contact measurement. Here, $[x_0, y_0, z_0]^T$ may be $[0, 0, 0]^T$ unless the probe head 24 that can change the attitude of the probe 26 or a multi-stylus is used.

[Formula 5]

$$\begin{bmatrix} x \\ y \\ z \end{bmatrix} = \begin{bmatrix} x_w \\ y_w \\ z_w \end{bmatrix} + \begin{bmatrix} x_o \\ y_o \\ z_o \end{bmatrix} + \mathbf{R} \begin{bmatrix} x_p \\ y_p \\ z_p \end{bmatrix}$$

Based on the calculation result of the position coordinates (x, y, z) of the probing spheres 65 and 65A at each measurement point by the probing sphere coordinate calculation unit 93, the shape calculation unit 94 calculates the shape of the measurement surface of the workpiece W.

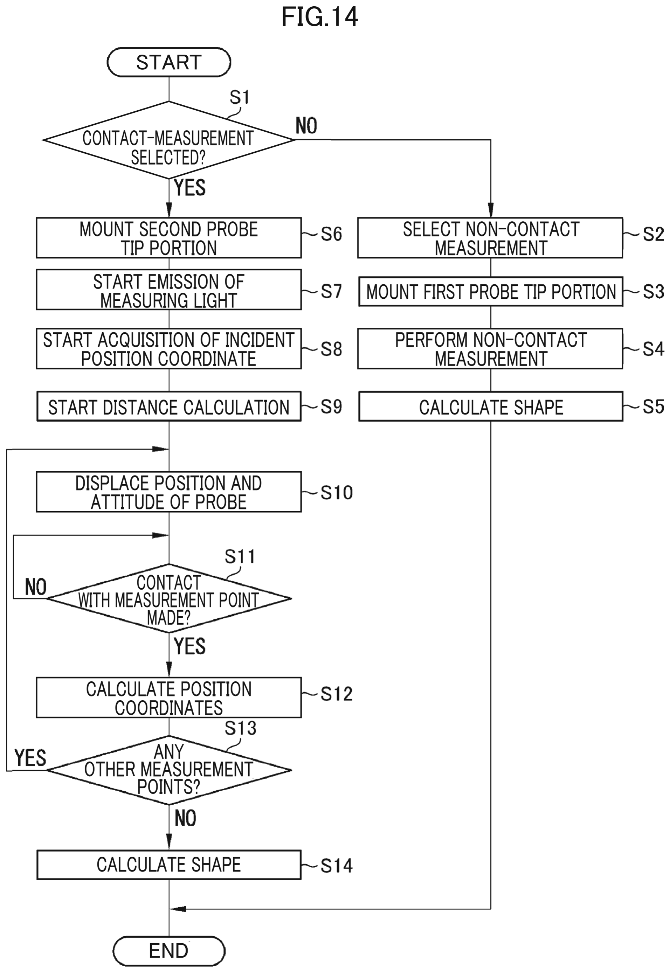

[Operation of Three-Dimensional Measuring Machine] Figure 14 is a flowchart indicating a flow of shape measurement processing of the measurement surface of the workpiece W by the three-dimensional coordinate measuring machine 10. As shown in Figure 14, when an operator selects non-contact measurement of the measurement surface of the workpiece W, the first probe tip portion 50 is mounted to the probe 26 (NO in step S1, step S2, and S3). Subsequently, non-contact measurement is performed at each of the measurement points in the measurement surface of the workpiece W by a publicly-known method (step S4), and the first shape calculation unit 85 calculates the shape of the measurement surface of the workpiece W (step S5).

On the other hand, when the operator selects contact measurement of the measurement surface of the workpiece W, the second probe tip portion 60 is mounted to the probe 26 (YES in step S1, step S6).

Subsequently, emission of the measuring light LA from the wavelength-swept light source 28 is started (step S7), so that reception of the reflected light LB by the light-receiving element 45 and acquisition of the incident position coordinate V2 ($x_p$, $y_p$) by the incident position coordinate acquisition unit 82 are started (step S8). At the same time, detection of the interference signal SG by the photodetector 36 and calculation of the distance calculation result V3 ($z_p$) by the distance calculation unit 84 are started (step S9).

Subsequently, each of the drive units 27X, 27Y, 27Z, and 27R are driven based on input operation to the controller 70 (manual measurement mode), or the drive control unit 80 drives each of the drive units 27X, 27Y, 27Z and 27R based on the measurement program (automatic measurement mode) to displace the probe 26 into the position and attitude that allow contact measurement of the first measurement point (step S10).

Once the displacement of the probe 26 is started, the contact detection unit 91 detects whether the probing spheres 65 and 65A are in contact with the first measurement point based on the incident position coordinate V2 ($x_p$, $y_p$) continuously acquired by the incident position coordinate acquisition unit 82, and the distance calculation result V3 ($z_p$) continuously calculated by the distance calculation unit 84 (NO in step S11). This enables optical detection of whether the probing spheres 65 and 65A are in contact with the measurement point without using the sensor 204, such as a conventional strain gauge (see Figure 15), or without separately providing a complicated detection device.

When the contact detection unit 91 detects that the probing spheres 65 and 65A are in contact with the first measurement point (YES in step S11), the probing sphere coordinate calculation unit 93 is activated. Here, the probing sphere coordinate calculation unit 93 acquires the relationship information 76 from the storage unit 74 in advance. The probing sphere coordinate calculation unit 93 then performs: acquisition of the position coordinate V1 ($x_w$, $y_w$, $z_w$) from the XYZ coordinate acquisition unit 81; acquisition of the incident position coordinate V2 ($x_p$, $y_p$) from the incident position coordinate acquisition unit 82; and acquisition of the distance calculation result V3 ($z_p$) from the distance calculation unit 84.

Subsequently, based on the position coordinate V1 ($x_w$, $y_w$, $z_w$), the incident position coordinate V2 ($x_p$, $y_p$), the distance calculation result V3 ($z_p$), and the relationship information 76 (R), the probing sphere coordinate calculation unit 93 calculates the position coordinates (x, y, z) of the probing spheres 65 and 65A using [Formula 5] described above. This completes the contact measurement of the first measurement point.

Hereinafter, for each of the remaining measurement points, displacement of the position and attitude of the probe 26 relative to the corresponding measurement point (step S10), detection of the contact between the probing spheres 65 and 65A and the measurement point by the contact detection unit 91 (step S11), and calculation of the position coordinates (x, y, z) by the probing sphere coordinate calculation unit 93 (step S12) are repeatedly executed (YES in step S13).

When calculation of the position coordinates (x, y, z) by the probing sphere coordinate calculation unit 93 is completed for all the measurement points (NO in step S13), the shape calculation unit 94 calculates the shape of the measurement surface of the workpiece W based on the calculation result of the position coordinates (x, y, z) of each measurement point (step S14).

Thus, in the three-dimensional coordinate measuring machine 10 of the present embodiment, the first probe tip portion 50 for non-contact measurement and the second probe tip portion 60 for contact measurement to of the probe 26 can be selectively attached to the probe 26, thereby, enabling selective execution of non-contact measurement and contact measurement of the measurement surface of the workpiece W. When non-contact measurement is selected, problems inherent in conventional contact measurement (probe deflection and probing sphere radius correction errors) can be avoided, thereby achieving high-precision shape measurement of the measurement surface.

In the three-dimensional coordinate measuring machine 10 of the present embodiment, when the measurement surface of the workpiece W is a mirror surface with a small roughness not suitable for non-contact measurement, the contact measurement can be selected to perform shape measurement of the measurement surface. In addition, when the contact measurement is selected, that is, when the second probe tip portion 60 is mounted to the probe 26, the position coordinates of the measurement point can be acquired, based on the position coordinate V1 of the probe 26 acquired by the XYZ coordinate acquisition unit 81, the incident position coordinate V2 of the reflected light LB acquired by the incident position coordinate acquisition unit 82, and the distance calculation result V3 from the distance calculation unit 84. Accordingly, in the contact measurement of the present embodiment, it is possible to perform high-accuracy shape measurement of the measurement surface without having to consider the occurrence of deflection of the probe 26 or radius correction errors of the probing spheres 65 and 65A. Furthermore, special mechanisms such as the fulcrum portion 203 shown in Figure 15 described above are no longer required.

Therefore, in the three-dimensional coordinate measuring machine 10 of the present embodiment, either the first probe tip portion 50 or the second probe tip portion 60 is selected depending on the type of the workpiece W, thereby enabling high-accuracy shape measurement of the workpiece W regardless of the type of the workpiece W.

[Others]

In the above embodiment, the optical system holder 53 in the first probe tip portion 50 holds the right-angle prism mirror 55, though the right-angle prism mirror 55 may be omitted, so that the measuring light LA may be emitted forward from the imaging lens 54 along the longitudinal axis MA and the reflected light LB reflected on the measurement surface of the workpiece W may be made incident on the imaging lens 54. In this case, the imaging lens 54 corresponds to the optical element in the present invention.

In the above embodiment, the probe 26 is equipped with the hollow motor 47 and the bearing 49, though the hollow motor 47 and the bearing 49 may be omitted.

In the above embodiment, the first probe tip portion 50 for non-contact measurement and the second probe tip portion 60 for contact measurement can be selectively mounted to the probe 26, though the probe 26 may support only the non-contact measurement or the contact measurement. For example, when the probe 26 supports only the non-contact measurement, the mounting shaft 46 and the first probe tip portion 50 are integrated, or the mounting shaft 46 and the hollow motor 47 are omitted and only the first probe tip portion 50 is fixed to the front side of the second surface 44b. When the probe 26 supports only the contact measurement, the mounting shaft 46 and the second probe tip portion 60 are integrated, or the mounting shaft 46 and the hollow motor 47 are omitted and only the second probe tip portion 60 is fixed to the front side of the second surface 44b.

In the above embodiment, although the three-dimensional coordinate measuring machine 10 is used as an example of the shape measuring device of the present invention, the invention is also applicable to a shape measuring device that measures the shape of various objects to be measured using the probe 26.

Reference Signs List

10...three-dimensional coordinate measuring machine, 12...stand, 14...table, 16L...left Y-carriage, 16R...right Y-carriage, 18...X-guide, 19...gate frame, 20...X-carriage, 22...Z-carriage, 24...probe head, 26...probe, 27R...head rotation drive unit, 27X...X-drive unit, 27Y...Y-drive unit, 27Z...Z-drive unit, 28...wavelength-swept light source, 29A...XYZ detection unit, 29B...rotation angle detection unit, 30...optical fiber cable, 32...fiber circulator, 33...optical fiber cable, 33a...cable tip surface, 34...optical fiber cable, 36...photodetector, 40...probe body portion, 40a...body base end portion, 40b...body portion tip portion, 41...beam splitter holder, 42...optical fiber connection portion, 43...collimator lens, 44...beam splitter, 44a...first surface, 44b...second surface, 44c...third surface, 45...light-emitting element, 46...mounting shaft, 47...hollow motor, 47a...stator, 47b...rotor, 49...bearing, 50...first probe tip portion, 51...first shaft, 53...optical system holder, 54...imaging lens, 55...right angle prism mirror, 60...second probe tip portion, 61...second shaft, 63...probing sphere holder, 64...corner cube prism, 65, 65A...probing sphere, 70...controller, 72...control device, 74...storage unit, 75...measurement program, 76...relationship information, 80...drive control unit, 81...XYZ coordinate acquisition unit, 82...incident position coordinate acquisition unit, 83...rotation angle acquisition unit, 84...distance calculation unit, 85...first shape calculation unit, 90...second shape calculation unit, 91...contact detection unit, 92...information acquisition unit, 93...probing sphere coordinate calculation unit, 94...shape calculation unit, 200...probe, 201...stylus, 202...probing sphere, 203...fulcrum portion, 204...sensor, BFL...back focus length, EFL...focal length, F1...tip flange, F2...base end flange, L1, L2, L2A, L3...distance, LA...measurement light, LB...reflected light, LC...reference light, LP...optical path, MA...longitudinal axis, SG...interference signal, TP...apex, V1...position coordinate, V2...incident position coordinate, V3...distance calculation result, W...workpiece, n...refractive index, $\theta 1$ to $\theta 3$ ... direction about axis

**Claims**

1. A probe, comprising:

    a light incidence/emission portion configured to emit measuring light and receive reflected light of the measuring light;
    an optical splitting element including a first surface, a second surface, and a third surface, the optical splitting element configured to:

        split the measuring light incident on the first surface from the light incidence/emission portion and emit a portion of the measuring light from the second surface;
        receive, on the second surface, the reflected light of the measuring light that has been emitted from the second surface; and
        split the reflected light received on the second surface, emit a portion of the reflected light from the first surface toward the light incidence/emission portion, and emit a remaining portion of the reflected light from the third surface;
        a light-receiving element configured to receive the reflected light emitted from the third surface; and
        a tip portion mounting portion having an optical path for the measuring light emitted from the second surface and the reflected light incident on the second surface, and configured to selectively mount a first probe tip portion for non-contact measurement and a second probe tip portion for contact measurement, wherein the first probe tip portion includes
        a hollow first shaft that includes a first tip portion and a first base end portion, and forms the optical path in a case where the first base end portion is removably mounted to the tip portion mounting portion, and
        an optical element provided in the first tip portion and configured to: emit the measuring light, which is incident from the second surface through an inside of the first shaft toward an object to be measured; and emit the reflected light, which is reflected by the object to be measured, toward the second surface, and
        the second probe tip portion includes
        a hollow second shaft that includes a second tip portion and a second base end portion, and forms the optical path in a case where the second base end portion is removably mounted to the tip portion mounting portion, a tip sphere provided in the second tip portion and configured to contact the object to be measured, and a retroreflective element configured to retroreflect the measuring light incident from the second surface through an inside of the second shaft and return the reflected light toward the second surface.

2. The probe according to claim 1, wherein
the optical element is a reflective element configured to:

reflect the measuring light incident from the second surface through the inside of the first shaft, toward the object to be measured; and
reflect the reflected light from the object to be measured toward the second surface.

3. The probe according to claim 1, wherein the retroreflective element is provided inside the second tip portion.

4. The probe according to claim 1, wherein the tip sphere is a retroreflective sphere lens that functions as the retroreflective element.

5. The probe according to claim 4, wherein the retroreflective sphere lens has a refractive index of 2.

6. The probe according to claim 1, wherein the light-receiving element is a position detection sensor or a two-dimensional image sensor.

7. The probe according to any one of claims 1 to 6, comprising
a collimator lens provided between the light incidence/emission portion and the first surface.

8. The probe according to any one of claims 1 to 6, comprising
a rotation mechanism configured to rotate the tip portion mounting portion and the first probe tip portion about an optical axis of the optical path, in a case where the first probe tip portion is mounted to the tip portion mounting portion.

9. A shape measuring device that measures a shape of an object to be measured, comprising:

the probe according to any one of claims 1 to 6;
a displacement mechanism configured to displace the probe;
a light source of the measuring light that is optically connected to the light incidence/emission portion; and
an interference signal detection unit that is optically connected to the light incidence/emission portion, and configured to detect an interference signal between the reflected light incident on the light incidence/emission portion and reference light that is a portion of the measuring light reflected on a reflection surface which is different from the object to be measured and the retroreflective element.

10. The shape measuring device according to claim 9, comprising:

an incident position coordinate acquisition unit configured to continuously acquire incident position coordinates of the reflected light incident on a light-receiving surface of the light-receiving element, in a case where the second probe tip portion is mounted to the tip portion mounting portion;
a distance calculation unit configured to continuously calculate a distance from a predetermined reference position to the retroreflective element based on the interference signal detected by the interference signal detection unit; and
a contact detection unit configured to detect contact of the tip sphere with the object to be measured, based on the incident position coordinates continuously acquired by the incident position coordinate acquisition unit and the distance continuously calculated by the distance calculation unit during driving of the displacement mechanism.

11. The shape measuring device according to claim 10, wherein
the displacement mechanism is configured to displace the probe in at least X, Y and Z directions in a machine coordinate system of the shape measuring device, the shape measuring device comprising:

an XYZ coordinate acquisition unit configured to acquire the X, Y and Z coordinates of the probe in the machine coordinate system; and
a tip sphere coordinate calculation unit configured to calculate the X, Y and Z coordinates of the tip sphere in the machine coordinate system, based on the X, Y and Z coordinates of the probe acquired by the XYZ coordinate acquisition unit, the incident position coordinates acquired by the incident position coordinate acquisition unit, and the distance calculated by the distance calculation unit, in a case where the contact detection unit detects the contact of the tip sphere with the object to be measured.

12. The shape measuring device according to claim 11, wherein
the tip sphere coordinate calculation unit acquires in advance information indicating a relationship among the X, Y and Z directions in the machine coordinate system, a two-dimensional direction of the light-receiving surface, and an emission direction of the measuring light from the second surface, and calculates the X, Y and Z coordinates of the tip sphere based on the X, Y and Z coordinates of the probe, the incident position coordinates, the distance, and the acquired information.

# FIG.1

# FIG.2

# FIG.3

# FIG.4

# FIG.5

# FIG.6

FIG.7

# FIG.8

FIG.9

## FIG.10

EP 4 692 719 A1

# FIG.11

EP 4 692 719 A1

## FIG.12

# FIG.13

# FIG.14

```
                    ┌─────────────┐
                    │    START    │
                    └─────────────┘
                           │
                          S1
                     ╱─────────╲        NO
                    ╱ CONTACT-   ╲──────────────────┐
                    ╲ MEASUREMENT ╱                  │
                     ╲ SELECTED? ╱                   │
                       ╲───────╱                     │
                          │ YES                      │
                          ▼                          ▼
              ┌─────────────────────┐  S6  ┌──────────────────────┐ S2
              │ MOUNT SECOND PROBE  │      │ SELECT NON-CONTACT   │
              │    TIP PORTION      │      │    MEASUREMENT       │
              └─────────────────────┘      └──────────────────────┘
                          │                          │
              ┌─────────────────────┐  S7  ┌──────────────────────┐ S3
              │  START EMISSION OF  │      │ MOUNT FIRST PROBE    │
              │  MEASURING LIGHT    │      │   TIP PORTION        │
              └─────────────────────┘      └──────────────────────┘
                          │                          │
              ┌─────────────────────┐  S8  ┌──────────────────────┐ S4
              │ START ACQUISITION   │      │ PERFORM NON-CONTACT  │
              │ OF INCIDENT         │      │   MEASUREMENT        │
              │ POSITION COORDINATE │      └──────────────────────┘
              └─────────────────────┘                 │
                          │              ┌──────────────────────┐ S5
              ┌─────────────────────┐ S9 │  CALCULATE SHAPE     │
              │ START DISTANCE      │    └──────────────────────┘
              │ CALCULATION         │               │
              └─────────────────────┘               │
                          │                          │
                          ▼                          │
              ┌─────────────────────┐ S10            │
              │ DISPLACE POSITION   │                │
              │ AND ATTITUDE OF     │                │
              │ PROBE               │                │
              └─────────────────────┘                │
                          │                          │
                         S11                         │
          NO        ╱──────────╲                     │
      ┌─────────────╲  CONTACT  ╱                     │
      │              ╲ WITH     ╱                     │
      │               ╲MEASURE-╱                      │
      │              MENT POINT                       │
      │                MADE?                          │
      │                  │ YES                        │
      │                  ▼                            │
      │      ┌─────────────────────┐ S12              │
      │      │ CALCULATE POSITION  │                  │
      │      │   COORDINATES       │                  │
      │      └─────────────────────┘                  │
      │                  │   S13                       │
  YES │             ╱──────────╲                      │
      └─────────────╲   ANY     ╱                      │
                     ╲ OTHER    ╱                      │
                     ╲MEASURE- ╱                       │
                    MENT POINTS?                       │
                          │ NO                          │
                          ▼                            │
              ┌─────────────────────┐ S14              │
              │  CALCULATE SHAPE    │                  │
              └─────────────────────┘                  │
                          │                            │
                          ▼◄───────────────────────────┘
                    ┌─────────────┐
                    │     END     │
                    └─────────────┘
```

30

# FIG.15

## INTERNATIONAL SEARCH REPORT

| International application No. |
|---|
| **PCT/JP2024/010221** |

**A. CLASSIFICATION OF SUBJECT MATTER**

*G01B 21/00*(2006.01)i; *G01B 11/00*(2006.01)i; *G01B 11/24*(2006.01)i
FI: G01B21/00 P; G01B11/00 G; G01B11/24 D

According to International Patent Classification (IPC) or to both national classification and IPC

**B. FIELDS SEARCHED**

Minimum documentation searched (classification system followed by classification symbols)

G01B21/00-21/32; G01B5/00-5/30; G01B11/00-11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-528794 A (LEICA GEOSYSTEMS AG) 11 July 2013 (2013-07-11)<br>entire text, all drawings | 1-12 |
| A | JP 2017-15534 A (CANON KABUSHIKI KAISHA) 19 January 2017 (2017-01-19)<br>entire text, all drawings | 1-12 |
| A | JP 2020-98180 A (TOKYO SEIMITSU CO., LTD.) 25 June 2020 (2020-06-25)<br>entire text, all drawings | 1-12 |
| A | JP 2014-137330 A (PANASONIC CORPORATION) 28 July 2014 (2014-07-28)<br>entire text, all drawings | 1-12 |
| A | JP 2017-522636 A (FARO TECHNOLOGIES INC.) 10 August 2017 (2017-08-10)<br>entire text, all drawings | 1-12 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/010221**

| Patent document cited in search report | | | Publication date (day/month/year) | Patent family member(s) | | | Publication date (day/month/year) |
|---|---|---|---|---|---|---|---|
| JP | 2013-528794 | A | 11 July 2013 | US | 2013/0050701 | A1 | |
| | | | | entire text, all drawings | | | |
| JP | 2017-15534 | A | 19 January 2017 | (Family: none) | | | |
| JP | 2020-98180 | A | 25 June 2020 | (Family: none) | | | |
| JP | 2014-137330 | A | 28 July 2014 | CN | 103940366 | A | |
| | | | | entire text, all drawings | | | |
| JP | 2017-522636 | A | 10 August 2017 | US | 2015/0330761 | A1 | |
| | | | | entire text, all drawings | | | |

Form PCT/ISA/210 (patent family annex) (July 2022)

**EP 4 692 719 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015075431 A
- JP 2020098180 A
- JP 2016024086 A
- JP 2018084434 A